# EUROPÄISCHE PATENTANMELDUNG

(11) **EP 3 021 007 A1**
(43) Veröffentlichungstag der Anmeldung: **18.05.2016**
(21) Anmeldenummer: 15185840.4
(22) Anmeldetag: 18.09.2015
(51) Int. Cl.: F16H 57/00, F16F 15/00

(54) **VORRICHTUNG UND VERFAHREN ZUR VERRINGERUNG VON ZAHNRADGERÄUSCHEN**

(30) Priorität: 11.11.2014 DE 102014222977
(71) Anmelder: ROBERT BOSCH GMBH, 70442 Stuttgart (DE)
(72) Erfinder: Benzel, Timo, 72127 Kusterdingen (DE); Dackermann, Tim, 72074 Tuebingen (DE)

(57) **Zusammenfassung**

Die vorliegende Erfindung betrifft eine Vorrichtung zur Verringerung von Zahnradgeräuschen, wobei ein Antriebszahnrad (3a) von einer elektrischen Maschine (1) antreibbar ist und mit einem Abtriebszahnrad (3b) in Zahneingriff steht, wobei das Antriebszahnrad (3a) und das Abtriebszahnrad (3b) jeweils in einem Lager (3d, 3e) gelagert sind, und mittels einer Sensoreinrichtung (5) ein dynamisches Schwingungssignal (SWS) erfassbar ist und das Schwingungssignal (SWS) einen Schwingungskompensationsregler (6) zuführbar ist, wobei mittels des Schwingungskompensationsreglers (6) ein Steuerdrehmomentsignal (SDS) zur Erzeugung eines Kompensationsdrehmoments (KD) ermittelbar ist, wobei mittels des Steuerdrehmomentsignal (SDS) eine elektrische Maschine (1) steuerbar ist, welche mit dem Antriebszahnrad (3a) oder dem Abtriebszahnrad (3b) zur Einbringung von Kompensationsdrehmoment (KD) verbunden ist, wobei die Sensoreinrichtung (5) zur Aufnahme einer Schwingung, die nahe eines Lagers (3d, 3e) am Lager (3d, 3e) oder im Lager (3d, 3e) eines der Zahnräder (3a, 3b) vorliegt, eingerichtet ist.

Weiter betrifft die Erfindung ein Getriebe und ein Verfahren zur Verringerung von Zahnradgeräuschen.

## Beschreibung

### Stand der Technik

Diese Erfindung betrifft eine Vorrichtung zur Verringerung von Zahnradgeräuschen, wobei ein Antriebszahnrad von einer elektrischen Maschine antreibbar ist und mit einem Abtriebszahnrad in Zahneingriff steht, wobei das Antriebszahnrad und das Abtriebszahnrad direkt oder jeweils über eine Welle in zumindest einem Lager gelagert sind und mittels einer Sensoreinrichtung ein dynamisches Schwingungssignal erfassbar ist, wobei das Schwingungssignal einem Schwingungskompensationsregler zuführbar ist, wobei mittels des Schwingungskompensationsreglers ein Steuerdrehmomentsignal zur Erzeugung eines Kompensationsdrehmoments ermittelbar ist, und wobei auf Basis des Steuerdrehmomentsignals eine elektrische Maschine steuerbar ist, welche mit dem Antriebszahnrad oder dem Abtriebszahnrad zur Einbringung von Kompensationsdrehmoment verbunden ist. Weiter betrifft die Erfindung ein Getriebe und ein Verfahren zur Verringerung von Zahnradgeräuschen.

Im Stand der Technik ist bekannt, dass bei einer Drehmomentübertragung über ein Zahnrad in ein anderes Zahnrad das Abwälzen der Zähne aufeinander Geräusche erzeugt. Dies ist darin begründet, dass der Eingriff der Zähne jeweils eine Stoßanregung für die einzelnen Zähne bedeutet, welche dadurch zu Eigenschwingungen angeregt werden. Dazu kommt eine Anregung durch die von der Winkelstellung abhängige Zahnsteifigkeit, die sich im Verlauf des Zahneingriffs ändert und welche in Geometriefehlern der Verzahnung begründet ist. Die Zahnräder führen aufgrund der schwankenden Zahnsteifigkeit Schwingungen mit einer Frequenz aus, die der Drehzahl des antreibenden Zahnrades multipliziert mit einem ganzzahligen Vielfachen der Zähnezahl entspricht. Zudem kann eine Weganregung stattfinden. Auf diese Weise regt sich ein die Zahnräder umfassendes Getriebe unter Last selbst zu derartigen Schwingungen an. Es handelt sich somit um ein parametererregtes System. Die Schwingungen aus einer oder mehreren Zahnradgetriebestufen erzeugen unter Last oft die dominanten Komponenten des Gesamtgeräusches eines Getriebes. Jedoch verursacht die Drehschwingung selbst nicht den Luftschall. Erst über translatorischen Wechselkräfte, die an der Zahnoberfläche wirken, werden die Vibrationen durch Körperschall über die Lager an ein Getriebegehäuse übertragen und von dort als Luftschall abgestrahlt.

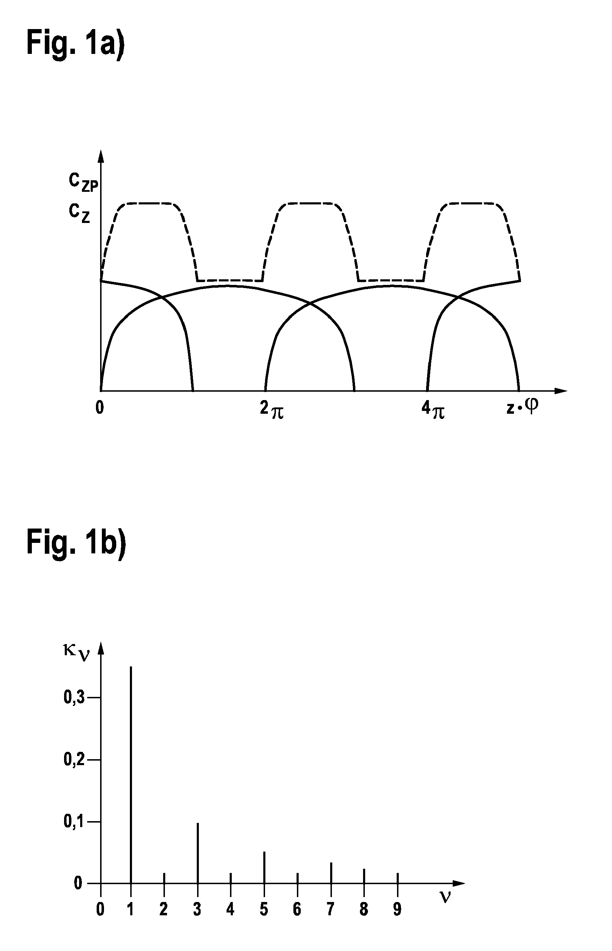

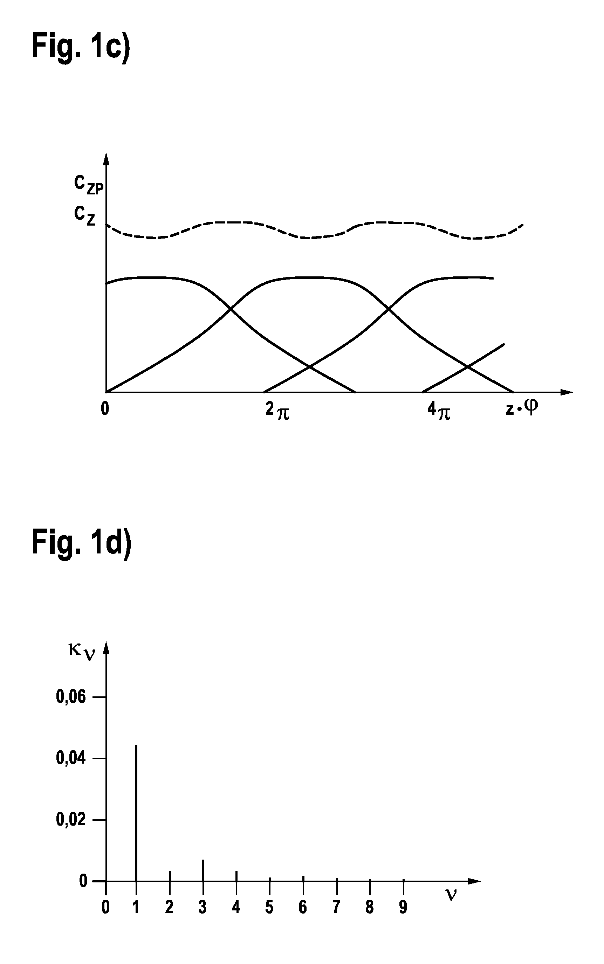

Wie in Figur 1 ist in vier Teilfiguren 1 a), 1b), 1c) und 1d) die Kopplungssteifigkeit von Stirnradgetrieben diagrammatisch dargestellt. Figur 1a) zeigt ein Diagramm der Verzahnungssteifigkeit C_{Z} von Zähnen von zwei geradverzahnten Zahnrädern. Auf der Abszisse sind Winkel in Radian angegeben, wobei der Umfangswinkel von 2π rad somit dem Umfangsabschnitt eines Zahnes entspricht. Mit durchgezogenen Linien ist die Steifigkeit von zwei Zähnen wiedergegeben, welche miteinander in Eingriff stehen. Eine solche durchgezogene Linie verläuft zum Beispiel von dem Ursprung des Diagramms in einem Bogen mit aufgesteilten Enden bis etwa 3π rad. Zu Beginn und zum Ende des Eingriffs dieses Zahnpaares ist auch ein weiteres Zahnpaar in Eingriff, was durch weitere bogenförmige durchgezogene Linien dargestellt ist. An den Positionen der Zahnräder, in denen zwei Zahnpaare in Eingriff sind, erhöht sich die Gesamtsteifigkeit der Getriebestufe erheblich, wie durch die gestrichelte Linie C_{ZP} dargestellt ist, welche die Zahnsteifigkeit der in Eingriff befindlichen Zahnpaare wiedergibt. Es ist deutlich zu sehen, dass diese Linie an den Stellen, an denen zwei Zahnpaare in Eingriff sind, deutlich nach oben ausschlägt. Auf diese Weise ergibt sich eine erheblich schwankende Steifigkeit einer solchen Getriebestufe. In der Figur 1b) ist ein Frequenzspektrum wiedergegeben, welches die angeregten Vielfachen der Zahneingriffsfrequenz wiedergibt. Die Grundwelle der Zahneingriffsfrequenz ist mit der Ziffer 1 bezeichnet. Die ungeradzahligen Oberwellen 3, 5 und 7 werden durch den angenährt rechteckförmigen Verlauf der Drehmomentsteifigkeit besonders stark angeregt. In Summe ergibt sich ein deutlich hörbares Frequenzspektrum mit einer recht hohen Gesamtleistung.

In der Figur 1c) ist die Kopplungssteifigkeit eines Stirnradgetriebes mit Schrägverzahnung dargestellt. Es ist hier zu sehen, dass sich durch die Schrägverzahnung mehr Zahnpaare, nämlich bis zu drei Zahnpaare, gleichzeitig in Eingriff befinden. Außerdem verlaufen die bogenförmigen Steifigkeitskurven der Zahnpaare an ihren seitlichen Rändern sehr viel flacher, was einen langsameren Anstieg und Abfall der Steifigkeit bei einem Zahneingriff bedeutet. Insgesamt ergibt sich eine erheblich vergleichmäßigte gestrichelt dargestellt Kurve für die Verzahnungssteifigkeit. Dementsprechend ist die Vibrationsanregung durch eine solche schräg verzahnte Zahnradpaarung erheblich geringer. Dies zeigt sich auch in dem in Figur 1d) dargestellten Frequenzspektrum, in dem schon die Grundwelle eine um etwa den Faktor 8 verringerte Amplitude aufweist; außerdem fällt auch die Anregung der Oberwellen erheblich geringer aus. Dennoch ist auch im Falle einer Schrägverzahnung noch mit einer verbleibenden Geräuschentwicklung zu rechnen. Zudem ist eine Schrägverzahnung in der Regel merklich teurer in der Herstellung und es gibt zusätzlich eine axiale Schwingungsanregung.

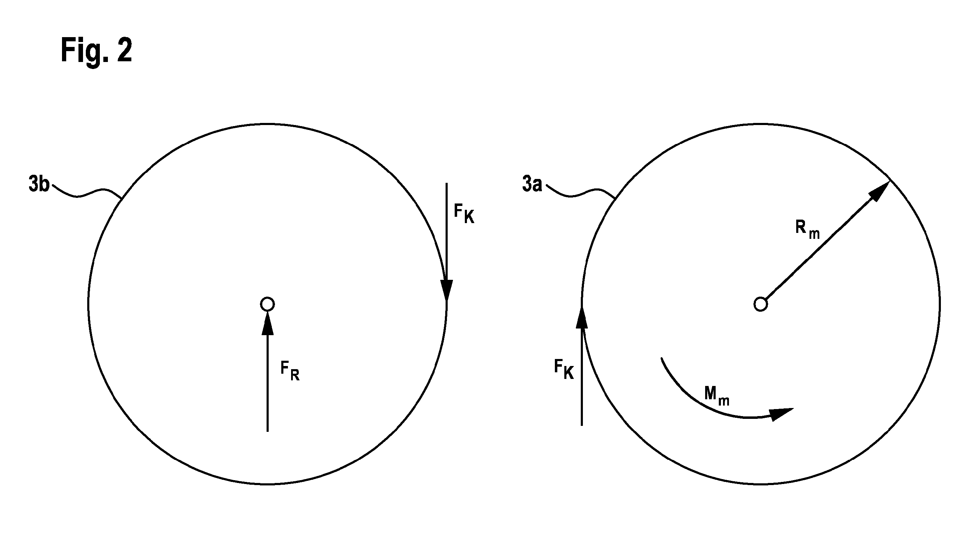

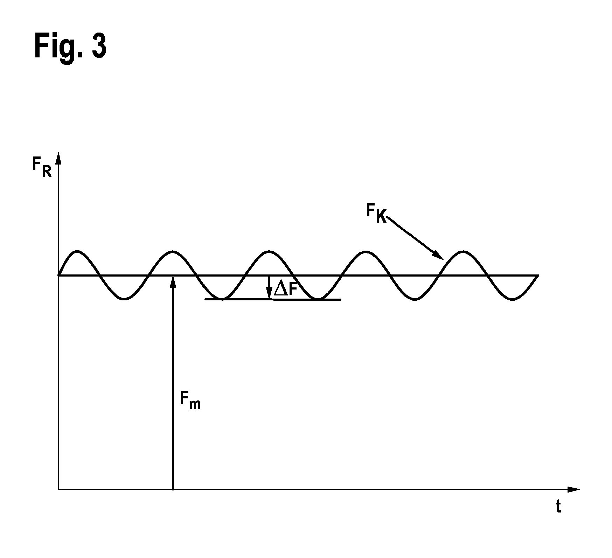

Bei einem Stirnradgetriebe, aber auch bei anderen Zahngetrieben, übt das Antriebsrad, welches mit einem Antriebsdrehmoment Mₘ beaufschlagt wird, zunächst eine momentenerzeugte Kraft Fₘ = Mₘ / Rₘ auf das Antriebszahnrad aus. Rₘ ist dabei der Wirkkreisradius des Antriebszahnrads. Die Situation ist in der Figur 2 schematisch dargestellt. Die tatsächlich wirkende Kopplungskraft Fₖ, die der momentenerzeugten Kraft Fₘ zusätzlich überlagerte dynamische Kraftkomponenten umfasst, wird vom Antriebszahnrad 3a auf das Abtriebszahnrad 3b übertragen, wodurch ein Abtriebsdrehmoment in das Abtriebszahnrad 3b eingebracht wird. Aufgrund des Kräftegleichgewichts wirkt die Kopplungskraft Fₖ in gleicher Größe auf das Abtriebszahnrad 3b ein. Wiederum in gleicher Größe erscheint die Kopplungskraft Fₖ als Reaktionskraft F_{R} als Reaktionskraft des Lagers des Abtriebszahnrades 3b. Aufgrund der selbstanregenden Drehschwingung der beiden Zahnräder 3a, 3b schwankt die Kopplungskraft Fₖ selbst bei einem konstanten Antriebsdrehmoment Mₘ um eine periodische Wechselkraft ΔF, die in der Schwingungen der Zähne und in Drehschwingungen begründet ist. Ebenso schwankt damit die Reaktionskraft F_{R} am Lager, was zur Erzeugung von Körperschall und damit zu Geräuschen führt. Der Kraftverlauf von F_{R} ist in einem Diagramm dargestellt, das in Figur 3 gezeigt ist. Beispielhaft ist ein sinusförmiger Verlauf einer Wechselkraft ΔF dargestellt, der einer momentenerzeugten Konstantkraft Fₘ überlagert ist, wodurch sich in Summe die Kopplungskraft zu Fₖ= Fₘ + ΔF ergibt.

Im Stand der Technik sind passive Methoden zur Reduktion der Körperschallkopplung oder der Schallabstrahlung durch das Gehäuse bekannt, die nachfolgend aufgelistet sind:
- akustische Kapselung des Getriebegehäuses
- Konstruktion des Gehäuses zur Minimierung der Schallabstrahlung
- Einbau von akustisch harten Lagern oder Lagersitzen
- Einbau von Schwingungstilgern
- Dämmung des Getriebegehäuses
- Anpassung der Materialpaarung der Zahnräder.

Diese Methoden sind beispielsweise in Linke, H: Stirnradverzahnung, Hansaverlag, München, Wien, 2010 und Naunheimer, H.; Bertsche, B.; Lechner, G.: Fahrzeuggetriebe - Grundlagen, Auswahl, Auslegung und Konstruktion. Springer Verlag, Berlin, Heidelberg, 1. Auflage, 2007 beschrieben.

Außerdem sind aktive Maßnahmen zur Verringerung der Schallabstrahlung bekannt, etwa aus der amerikanischen Patentschrift US5809843. In deren Figuren 7a und 8 ist ein System zur Verringerung von Getriebegeräuschen gezeigt. Ein Schwingungssensor 50 ist an dem Getriebegehäuse angebracht und nimmt Körperschall aus dem Getriebegehäuse auf. Der Schwingungssensor kann als Beschleunigungssensor oder Mikrofon ausgebildet sein. Das Schwingungssignal wird zu einer Steuereinrichtung geleitet, welche ein Drehmomentsignal erzeugt, welches zu einem Elektromotor geleitet wird, welcher wiederum ein entsprechendes Drehmoment auf das Antriebszahnrad des Getriebes ausübt. Durch die Rückkopplung werden die Drehmomente an den Zahnrädern so verändert, dass die Getriebegeräusche durch Vergleichmäßigung des Gesamtdrehmoments verringert werden. Nachteilig an dieser Lösung ist, dass der Körperschall sich durch das Getriebegehäuse ausbreitet, bis er den Schwingungssensor erreicht und dabei schon Schall abstrahlt. Durch diesen Weg des Körperschalls kann dieser sich verändern, was die Berechnung eines korrekten Kompensationssignals erheblich erschweren kann. Zudem erfordert eine Regelung, die ein Störsignal ausregeln soll, dass zumindest ein kleines Störsignal immer noch bei dem Sensor ankommt. Dies bedeutet, dass selbst bei einer sehr gut funktionierenden Regelung noch immer Körperschall durch das Gehäuse laufen muss, wodurch auch bewirkt wird, dass Schall abgestrahlt wird. Außerdem kann die Sensorposition die Regelgüte bzw. die Geräuschreduktion beeinflussen.

### Offenbarung der Erfindung

Erfindungsgemäß wird vorgeschlagen, dass die Sensoreinrichtung dazu eingerichtet ist, Schwingungen aufzunehmen, die nahe einem Lager, am Lager oder im Lager eines der Zahnräder vorliegen. Unter Schwingungen werden hierbei mechanische Schwingungen im Material des Lagers oder seiner nahen Umgebung, Luftschallschwingungen im, am oder nahe des Lagers sowie Druckschwingungen von Lagerschmierstoffen verstanden. Die können konstanten Größen überlagert sein wie etwa eine statische Lagerkraft oder ein statischer Schmierstoffdruck. Erfindungsgemäß werden die Schwingungen aufgenommen, ohne dass sie zuvor durch das Getriebegehäuse übertragen werden müssen. Gemäß der Erfindung wird der Weg des Körperschalls zu einem Schwingungssensor durch das Getriebegehäuse vermieden, sodass die Regelung vereinfacht wird und Schallabstrahlung durch das Getriebegehäuse besser verringert werden kann. Die Schwingungen werden schon im Lager, von dem sie in das Getriebegehäuse übertragen werden, möglichst weitgehend reduziert. Aus einem erfassten Schwingungssignal werden zur Unterdrückung der wechselnden Lagerkräfte mittels eines Elektromotors, der auf das Antriebszahnrad einwirkt, geeignete Drehmomentschwankungen erzeugt. Diesen kann ein Wunschdrehmoment überlagert werden, das der Elektromotor ebenfalls liefern kann. Alternativ können zur Einkopplung des Kompensationsdrehmoments in das Antriebszahnrad und für das Wunschdrehmoment auch separate elektrische Maschinen vorgesehen sein. Durch das Kompensationsdrehmoment wird die Lagerkraft vorzugsweise wenigstens angenähert konstant. Im Normalfall ist dies von der Verzahnungsgeometrie unabhängig. In der Regeleinrichtung kann ein Regelalgorithmus zum Einsatz kommen. Die auszuregelnde Größe ist normalerweise der wechselnde Lagerkraftanteil ΔF. Die Regelung kann als Regelgröße auch eine daraus abgeleitete Größe verwenden. Vorzugsweise minimiert der Regler den Wechselanteil der Lagerkraft bei Frequenzen, die ein Vielfaches der Drehfrequenz des Antriebszahnrades multipliziert mit dessen Zähnezahl ist. Solche Frequenzen lassen sich beispielsweise durch fᵢ = i*nₘ*Zₘ / 60 berechnen, wobei nₘ die Drehzahl des Antriebsrades in Umdrehungen/Minute, Zₘ die Zähneanzahl des Antriebsrades und i ein Element aus der Menge der natürlichen Zahlen, also i = {1, 2, 3, ...} ist. Die Frequenz ergibt sich in Hertz.

Vorzugsweise ist Sensoreinrichtung in, an oder nahe der Lagerstelle zur Aufnahme eines Schwingungssignals angeordnet.

Erfindungsgemäß werden die Geräusche schon an einer Anregungsstelle des Gehäuses vermindert. Betrachtungen von komplexen Gehäuseschwingungen oder langes heuristisches Suchen nach einer optimalen Messposition für die Sensoreinrichtung werden vorteilhafterweise überflüssig, was insbesondere bei Entwicklungstätigkeiten vorkommen kann. Es sei angemerkt, dass jede Regelung eine Regelabweichung hat und daher eine Restschwingung am Lager verbleibt. Daher kann Restschall von dem Lager ins Gehäuse eintreten und abgestrahlt werden. Durch die Regelung ist das Ausmaß des abgestrahlten Schalls jedoch erheblich verringert.

Die Unteransprüche zeigen bevorzugte Weiterbildungen der Erfindung.

In einer Ausführungsform ist die Sensoreinrichtung mit einem Kraftsensor ausgebildet. Im Unterschied zu einer Beschleunigungsmessung arbeitet eine Kraftmessung ohne freie seismische Massen, vielmehr ist ein Kraftsensor in einen Kraftfluss eingebunden, der zu oder von der Messstelle weg führt. Im vorliegenden Fall ist der Kraftfluss daher an einer Stelle am Lager integriert, an der über ihn Kräfte aus der Achse oder Welle des Zahnrades geleitet werden. Vorzugsweise gibt der Kraftsensor die über ihn geleitete Kraft an das Getriebegehäuse weiter. Die Kraft umfasst vorzugsweise eine wechselnde Kraft, welche Körperschall verursacht oder im Zusammenhang mit Körperschall auftritt.

In einer weiteren Ausführungsform ist die Messeinrichtung mit einem Beschleunigungssensor ausgebildet, welcher durch Körperschall erzeugte Beschleunigungen in, an oder nahe dem Lager aufnimmt. Der Beschleunigungssensor ist bevorzugt an einem Teil des Getriebegehäuses nahe oder an oder denkbarerweise sogar in dem Lager eines der Zahnräder angeordnet.

In einer weiteren Ausführungsform ist die Messeinrichtung mit einem Drucksensor ausgebildet. Ähnlich wie ein Kraftsensor wird ein Drucksensor in dem Kraftfluss zu der oder von der zu vermessenden Stelle angeordnet und misst eine Kraft pro Flächeneinheit. Ein Drucksensor kann alternativ oder zusätzlich den Druck eines Fluids im Lagerspalt messen. Dann muss der Drucksensor nicht zwingend nahe, an oder in dem Lager angeordnet sein. Ein Druck mit einer überlagerten Schwingung kann ihm durch eine Flüssigkeitszuleitung zugeführt werden.

In einer weiteren Ausführungsform ist die Sensoreinrichtung mit einem Dehnungsmessstreifen ausgebildet. Ein solcher Dehnungsmessstreifen misst die Materialverlängerung, welche durch Schwingungskräfte beziehungsweise Körperschall in Material, das davon durchsetzt ist, entstehen können.

In einer weiteren Ausführungsform ist die Sensoreinrichtung mit einem Piezodetektor und/oder einem magnetostriktiven Sensor ausgebildet. Eine Piezoeinrichtung ermöglicht die Messung von Beschleunigungen mittels des piezoelektrischen Effekts. Eine solche Sensoreinrichtung verwendet typischerweise eine seismische Masse, die im Vergleich zu der schwingenden Anbringungsstelle der Sensoreinrichtung aufgrund ihrer Trägheit eine geringere Bewegung ausführt. Die Anbringungsstelle ist nahe, an oder in der Lagerungsstelle eines der Zahnräder.

In einer weiteren Ausführungsform ist die Sensoreinrichtung mit einem Mikrofon ausgebildet. Es ist nahe an oder in der Lagerstelle angeordnet, um von dieser abgestrahlten Luftschall aufzunehmen. Auch in dieser Ausführungsform wird ein Umweg der Schwingungen über das Getriebegehäuse vermieden und die Vorteile der Erfindung erzielt.

In einer weiteren Ausführungsform ist die Sensoreinrichtung an einem Lager des Abtriebszahnrades angeordnet. Dies ist vorteilhaft, weil in vielen Fällen zugekaufte Elektromotoren mit bereits auf der Welle aufgesetztem Antriebszahnrad verwendet werden, sodass ein Eingriff in die Lager des Antriebszahnrades, die häufig zugleich die Motorlager sind, häufig erheblich schwieriger ist, als die Anordnung der Sensoreinrichtung an dem Lager des Abtriebszahnrades.

In einer weiteren Ausführungsform wird vorgeschlagen, dass die Kompensationsdrehmomente über eine zusätzliche elektrische Maschine in das Antriebszahnrad eingekoppelt werden. Denkbar ist außerdem, zusätzliche Kompensationskräfte in das Abtriebszahnrad einzukoppeln.

In einem weiteren Aspekt der Erfindung wird ein Getriebe mit einer Vorrichtung nach einer der vorstehend beschriebenen Ausführungsformen vorgeschlagen. Die Vorteile der Erfindung werden entsprechend verwirklicht.

In einer Ausführungsform des Getriebes ist das Getriebe als Fahrzeuggetriebe ausgeführt, insbesondere als ein Getriebe für ein elektrisch angetriebenes Fahrzeug wie etwa ein Elektrofahrrad oder ein Elektroauto oder ein elektrisch angetriebener Transporter oder Lastkraftwagen. Auf diese Weise können die Geräuschemissionen eines solchen Fahrzeuges gesenkt werden.

In einem weiteren Aspekt wird ein Verfahren zur Verringerung von Zahnradgeräuschen vorgeschlagen. Zahnradgeräusche entstehen, wenn ein Antriebszahnrad von einer elektrischen Maschine angetrieben wird und mit einem Abtriebszahnrad in Eingriff steht, wobei ein Drehmoment zwischen dem Antriebszahnrad und dem Abtriebszahnrad übertragen wird. Das Antriebszahnrad und das Abtriebszahnrad weisen jeweils ein Zahnradlager auf. Ein solches Lager kann auch an einer Welle angeordnet sein, mit welcher das Zahnrad verbunden ist. Mittels einer Sensoreinrichtung wird ein Schwingungssignal erfasst, welches Schwingungen nahe, an oder in einem der Lager der Zahnräder wiedergibt. Das Schwingungssignal kann aus Körperschall oder aus abgestrahltem Luftschall oder aus Druckschwankungen erfasst werden. Das erfasste Schwingungssignal ist ein Wechselsignal und wird einer Regeleinrichtung zugeführt. Die Regeleinrichtung erzeugt ein Steuersignal, welches zur Erzeugung eines Kompensationsdrehmomentes genutzt wird. Es wird bewirkt, dass das Kompensationsdrehmoment in eines der Zahnräder eingebracht wird, um die Drehmomentschwankungen, die durch ungleichmäßige Kopplungssteifigkeit zwischen den Zahnrädern hervorgerufen wird, zu kompensieren. Das Kompensationsdrehmoment wird von einer elektrischen Maschine abgegeben, welche mit einem der Zahnräder zur Einbringung des Kompensationsdrehmoments verbunden ist. Erfindungsgemäß wird von der Sensoreinrichtung eine Schwingung erfasst. die nahe, an oder in einem der Lager von einem der Zahnräder vorliegt. Darunter fällt auch, dass einem Drucksignal nahe, an oder in dem Lager eine Schwingung aufgeprägt wird, selbst wenn dieses an anderer Stelle erfasst wird. Durch das erfindungsgemäße Verfahren werden dieselben Vorteile realisiert, die vorstehend in Bezug auf eine Vorrichtung zur Verringerung von Zahnradgeräuschen beschrieben worden sind.

Details der vorstehend beschriebenen Ausführungsformen der Vorrichtung zur Verringerung von Zahnradgeräuschen oder des vorstehend beschriebenen Getriebes können auch in Weiterbildungen des Verfahrens zur Anwendung kommen.

### Kurze Beschreibung der Zeichnungen

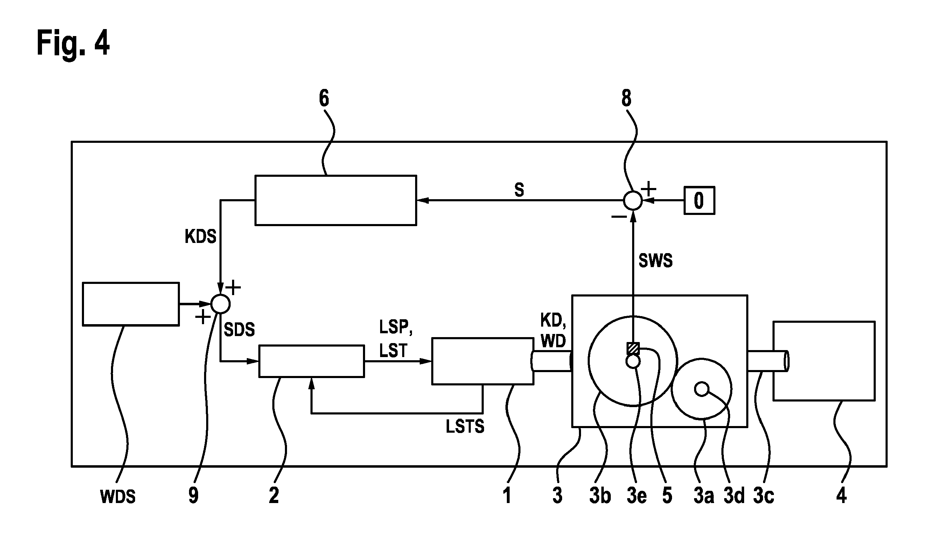

Nachfolgend wird ein bevorzugtes Ausführungsbeispiel der Erfindung unter Bezugnahme auf die begleitende Figur 4 im Detail beschrieben. In den Ausführungsbeispielen sind gleiche beziehungsweise funktional gleiche Teile jeweils mit den gleichen Bezugszeichen bezeichnet.

In den Zeichnungen ist:
- Figur 1a): ein Diagramm der Kopplungssteifigkeit eines Stirnradgetriebes mit Geradverzahnung (Stand der Technik),
- Figur 1b): ein Frequenzspektrum angeregter Oberwellen eines Stirnradgetriebes mit Geradverzahnung (Stand der Technik),
- Figur 1c): ein Diagramm der Kopplungssteifigkeit eines Stirnradgetriebes mit Schrägverzahnung (Stand der Technik),
- Figur 1d): ein Frequenzspektrum angeregter Oberwellen eines Stirnradgetriebes mit Schrägverzahnung (Stand der Technik),
- Figur 2: beispielhaft und schematisch die Erzeugung von Koppelkräften zwischen Zahnrädern aus einem Antriebsmoment sowie die Erzeugung einer Lagerreaktionskraft (Stand der Technik),
- Figur 3: ein Diagramm mit einer Darstellung der Amplitude einer wechselnden Koppelkraft und einer Lagerreaktionskraft über der Zeit (Stand der Technik), und
- Figur 4: ein schematisch dargestelltes Blockdiagramm einer Ausführungsform der Erfindung mit einer Regelschleife zur Erzeugung eines Kompensationsdrehmomentes.

Figur 4 zeigt ein Getriebe 3, welches einen Zahnradsatz mit einem Antriebszahnrad 3a und einem Abtriebszahnrad 3b umfasst, wobei Zahnrad 3a nicht zwangsweise kleiner als Zahnrad 3b sein muss, sondern auch gleich groß oder größer sein kann. Das Getriebe 3 wird von einer elektrischen Maschine 1 angetrieben, wobei die Einleitung von mechanischer Leistung in das Getriebe schematisch dargestellt ist. Eine mechanische Verbindung zwischen dem Antriebszahnrad 3a und der elektrischen Maschine 1 ist dabei nicht gezeigt. Über einen Abtrieb 3c aus dem Getriebe 3 wird eine Last 4 mit dem Getriebe mechanisch angetrieben. Das Antriebszahnrad 3a weist ein Lager 3d und das Abtriebszahnrad 3b ein Lager 3e auf. An dem Lager 3e ist eine Sensoreinrichtung 5 angeordnet. Die Sensoreinrichtung 5 nimmt Schwingungen in dem Lager, an dem Lager oder nahe dem Lager auf. Vorzugsweise ist die Sensoreinrichtung 5 an dem Getriebegehäuse oder einer Achse des Zahnrades 3b befestigt. Die Sensoreinrichtung 5 erzeugt ein Schwingungssignal SWS, das zu einer Summationsstelle 8 geleitet wird. An der Summationsstelle 8 wird das Schwingungssignal SWS subtraktiv verarbeitet. In die Summationsstelle 8 geht additiv der Sollwert 0 ein. Dies gibt vor, dass der Körperschall beziehungsweise Luftschall, der von der Sensoreinrichtung 5 gemessen wird, zu 0 geregelt werden soll. Die Summationsstelle 8 bewirkt somit lediglich eine Vorzeichenumkehr des Schwingungssignal SS. Das an dem Summationspunkt 8 erzeugte Signal S wird zu einem Schwingungskompensationsregler 6 geleitet. Der Lagerkraftkompensationsregler erzeugt aus dem Signal S ein Kompensationsdrehmomentsignal KDS. Dabei kann in dem Schwingungskompensationsregler 6 ein Algorithmus verwendet werden. Die Funktion der Summationsstelle 8 kann auch in den Lagerkraftkompensationsregler 6 integriert sein. Das Kompensationsdrehmomentsignal KDS wird von dem Schwingungskompensationsregler 6 zu einer Drehmomentsummationsstelle 9 geleitet, in die das Kompensationsdrehmomentsignal KDS additiv eingeht. Außerdem geht in die Drehmomentsummationsstelle 9 additiv ein Wunschdrehmomentsignal WDS ein. Die Drehmomentsummationsstelle 9 erzeugt ein Steuerdrehmomentsignal SDS, welches zu einem Motorregler 2 geleitet wird. Das Steuerdrehmomentsignal SDS umfasst ein in vielen Fällen wenigstens näherungsweise konstantes Wunschdrehmomentsignal WDS, dem das Kompensationsdrehmomentsignal KDS zur Kompensation der Getriebegeräusche überlagert ist. Der Motorregler 2 erzeugt aus dem Steuerdrehmomentsignal SDS Leiterspannungen LSP, welche zu der elektrischen Maschine 1 geleitet werden. In Verbindung mit einer elektrischen Impedanz der elektrischen Maschine 1 ergeben sich den Leiterspannungen LSP entsprechend Leiterströme LST, welche in der elektrischen Maschine 1 zu Drehmoment gewandelt werden. Von dem Motorregler 2 wird ein Leiterstromsignal LSTS zurückgeführt, mit welchem er die Leiterspannung LSP so regelt, dass sich an der elektrischen Maschine 1 das Steuerdrehmoment ergibt, das dem Steuerdrehmomentsignal SDS zumindest näherungsweise entspricht. Das Steuerdrehmoment umfasst ein Wunschdrehmoment und ein Kompensationsdrehmoment KD. In der Figur 4 wird das Leiterstromsignal LSTS von der elektrischen Maschine 1 zu dem Motorregler 2 zurückgeführt; das Leiterstromsignal LSTS kann jedoch in anderen Varianten auch an einer Zuleitung zu der elektrischen Maschine 1 oder in dem Motorregler 2 selbst erfasst werden. Die Dynamik der vorstehend beschriebenen Regelschleife aus der Summationsstelle 8, dem Lagerkraftkompensationsregler 6, der Drehmomentsummationsstelle 9, dem Motorregler 2 und der elektrischen Maschine 1 ist vorzugsweise höher als die Frequenz der Grundwelle der Zahnradgeräusche. Bevorzugt ist die Dynamik der Regelschleife größer als die dritte Oberwelle der Zahnradgeräusche.

## Patentansprüche

1. Vorrichtung zur Verringerung von Zahnradgeräuschen,
wobei ein Antriebszahnrad (3a) von einer elektrischen Maschine (1) antreibbar ist und mit einem Abtriebszahnrad (3b) in Zahneingriff steht, wobei das Antriebszahnrad (3a) und das Abtriebszahnrad (3b) jeweils in einem Lager (3d, 3e) gelagert sind, und
mittels einer Sensoreinrichtung (5) ein dynamisches Schwingungssignal (SWS) erfassbar ist und das Schwingungssignal (SWS) einem Schwingungskompensationsregler (6) zuführbar ist, wobei mittels des Schwingungskompensationsreglers (6) ein Steuerdrehmomentsignal (SDS) zur Erzeugung eines Kompensationsdrehmoments (KD) ermittelbar ist, wobei auf Basis des Steuerdrehmomentsignals (SDS) eine elektrische Maschine (1) steuerbar ist, welche mit dem Antriebszahnrad (3a) oder dem Abtriebszahnrad (3b) zur Einbringung von Kompensationsdrehmoment (KD) verbunden ist,
**dadurch gekennzeichnet, dass** die Sensoreinrichtung (5) zur Aufnahme einer Schwingung, die nahe eines Lagers (3d, 3e), am Lager (3d, 3e) oder im Lager (3d, 3e) eines der Zahnräder (3a, 3b) vorliegt, eingerichtet ist.

2. Vorrichtung nach Anspruch 1, **dadurch gekennzeichnet, dass** die Sensoreinrichtung (5) einen Kraftsensor umfasst.

3. Vorrichtung nach Anspruch 1, **dadurch gekennzeichnet, dass** die Sensoreinrichtung (5) einen Beschleunigungssensor umfasst.

4. Vorrichtung nach Anspruch 1, **dadurch gekennzeichnet, dass** die Sensoreinrichtung (5) einen Drucksensor umfasst.

5. Vorrichtung nach einem der vorangehenden Ansprüche, **dadurch gekennzeichnet, dass** die Sensoreinrichtung (5) einen Dehnungsmessstreifen umfasst.

6. Vorrichtung nach einem der Ansprüche 1 bis 4, **dadurch gekennzeichnet, dass** die Sensoreinrichtung (5) einen Piezodetektor und/oder einen magnetostriktiven Sensor umfasst.

7. Vorrichtung nach Anspruch 1, **dadurch gekennzeichnet, dass** die Sensoreinrichtung (5) ein Mikrofon umfasst.

8. Vorrichtung nach einem der vorangehenden Ansprüche, **dadurch gekennzeichnet, dass** die Sensoreinrichtung (5) an einem Lager (3e) des Abtriebszahnrades (3b) angeordnet ist.

9. Vorrichtung nach einem der vorangehenden Ansprüche, **dadurch gekennzeichnet, dass** die elektrische Maschine (1) zur Einbringung von Kompensationsdrehmoment (KD) zur Verringerung der Zahnradgeräusche eine zusätzliche elektrische Maschine aufweist, welche zur Erzeugung des Kompensationsdrehmoments (KD) eingerichtet ist.

10. Getriebe (3) mit einer Vorrichtung nach einem der vorangehenden Ansprüche.

11. Getriebe (3) nach Anspruch 10, **dadurch gekennzeichnet, dass** es als Fahrzeuggetriebe ausgeführt ist, insbesondere als Getriebe (3) für ein Elektrofahrrad, ein Elektroauto oder einen elektrisch angetriebenen Transporter oder Lastkraftwagen.

12. Verfahren zur Verringerung von Zahnradgeräuschen,
wobei ein Antriebszahnrad (3a) von einer elektrischen Maschine (1) angetrieben wird und mit einem Abtriebszahnrad (3b) in Zahneingriff steht, wobei das Antriebszahnrad (3a) und das Abtriebszahnrad (3b) jeweils in einem Lager (3d, 3e) gelagert sind, und
mittels einer Sensoreinrichtung (5) ein Schwingungssignal (SWS) erfasst wird und das Schwingungssignal (SWS) einem Schwingungskompensationsregler (6) zugeführt wird, wobei der Schwingungskompensationsregler (6) ein Kompensationsdrehmomentsignal (KDS) zur Erzeugung eines Kompensationsdrehmoments (KD) ermittelt, wobei das Kompensationsdrehmomentsignal (KDS) eine elektrische Maschine (1) steuert,
welche mit dem Antriebszahnrad (3a) oder dem Abtriebszahnrad (3b) zur Einbringung von Kompensationsdrehmoment (KD) verbunden ist,
**dadurch gekennzeichnet, dass** die Sensoreinrichtung (5) eine Schwingung (SWS) erfasst, die nahe, an oder in einem Lager (3d, 3e) eines der Zahnräder (3a, 3b) vorliegt.
